# EUROPÄISCHE PATENTSCHRIFT

(11) **EP 2 815 407 B1**
(45) Veröffentlichungstag und Bekanntmachung des Hinweises auf die Patenterteilung: **20.04.2016**
(21) Anmeldenummer: 13703619.0
(22) Anmeldetag: 13.02.2013
(51) Int. Cl.: C08G 59/22, C08K 5/17, H01B 13/16, H01B 19/04, H02K 3/30, H02K 3/40, C08G 59/42, H01B 3/40, C08K 3/36, H01B 19/02

(54) **ELEKTROISOLIERHARZ AUF BASIS VON ISOHEXIDDIOLDIGLYCIDETHERN**
ELECTRICAL INSULATING RESIN BASED ON ISOHEXIDE DIOL DIGLYCIDE ETHERS
RÉSINE D'ISOLATION ÉLECTRIQUE À BASE DE DIGLYCIDE ÉTHERS D'ISOHEXIDEDIOL

(30) Priorität: 14.02.2012 DE 102012202161
(43) Veröffentlichungstag der Anmeldung: 24.12.2014
(73) Patentinhaber: Elantas GmbH, 46483 Wesel (DE)
(72) Erfinder: SONCINI, Giancarlo, 13503-240 Rio Claro (BR); BAUMGARTEN, Gunther, 22455 Hamburg (DE); LIENERT, Klaus-Wilhelm, 22763 Hamburg (DE)
(74) Vertreter: Schuck, Alexander
(86) Internationale Anmeldenummer: PCT/EP2013/052824
(87) Internationale Veröffentlichungsnummer: WO 2013/120872

(56) Entgegenhaltungen:
- EP-A2- 1 176 171
- WO-A1-2008/147473
- DE-A1- 4 206 733
- US-A1- 2008 009 599

## Beschreibung

Die Erfindung betrifft ein Elektroisolierharz auf Basis von Isohexiddioldiglycidethern sowie dessen Verwendung.

Elektroisolierharze auf Basis von Epoxidharzen sind bekannt und vielfach beschrieben worden.

In DE 4 206 733 werden Elektrovergussmassen auf Basis von Bisphenol-A-diglycidethern und Bisphenol-F-diglycidethern beschrieben. Diese Vergussmassen enthalten Dolomit als Füllstoff und Methyltetrahydrophthalsäureanhydrid als Härter. Die Härtung erfolgt bei 80°C bis 100°C und eine Nachhärtung bei 130°C bis 140°C über einen Zeitraum von 2 bis 4 Stunden.

In DE 4 139 877 und EP 545 506 werden cycloaliphatische Epoxidharze beschrieben. Es sind 3,4-Epoxycyclohexylmethy-3,4-epoxycyclohexylcarboxylat und Bis(3,4-epoxycyclohexylmethyl)-adipat. Als Füllstoff wird Dolomit und als Härter wird Tetrahydrophthalsäureanhydrid verwendet.

In CH 424 256 wird eine härtbare Gießharz-Mischung auf Basis von Cyclododecantriepoxyd mit Phthalsäureanhydrid oder 4,4'-Diamino-3,3'-dimethyldicyclohexylmethan als Härtern beschrieben.

Die Basisepoxidharze können auch modifiziert sein. In WO 98/04609 werden beispielsweise silikonmodifizierte Epoxidharze beschrieben.

Epoxidharze kommen ohne Füllstoffe als Imprägniermittel und mit Füllstoffen als Gießharze zur Anwendung. Als Füllstoffe für Epoxidharze finden neben Dolomit auch andere anorganische Materialien wie Kreide und Aluminiumoxid Verwendung, auch in Kombination mit Kurzglasfasern, wie in DE 1 570 211 beschrieben. Als organischer Füllstoff wird auch Gummipulver verwendet, wie in DE 1 495 072 beschrieben.

Epoxidharze werden bei der Verwendung mit Anhydriden von Dicarbonsäuren, Diaminen und deren Derivaten, sowie mit Lewis-Säuren, wie z.B. Bortrichlorid- und Bortrifluoridkomplexen, gehärtet. Beschrieben wird die Härtung von Epoxydharzen unter anderem in Büchern wie "Epoxidverbindungen und Epoxidharze" von A.M. Paquin, Springer-Verlag, 1958 oder "Die Kunststoffe und ihre Eigenschaften" von H. Domininghaus, VDI Verlag, 1988.

In der Elektrotechnik haben sich Epoxidharze in den verschiedensten Anwendungen bewährt. In DE 19 809 572 wird ein Gießharztransformator beschrieben. In DE 4 132 982 wird der Einsatz von Epoxidharzen zum Statorverguss beschrieben. Die DE 1 220 500 beschreibt die Verwendung von Gießharzen zur Herstellung von Hochspannungsisolatoren. Die DE 1 209 650 beschreibt das Umgießen der Wickelköpfe mit einem Gießharz. Der Verguss einer Hochspannungsspule wird in der DE 1 207 605 beschrieben. Außerdem haben sie sich zur Imprägnierung von Traktionsmotoren ("Isolationssysteme für Traktionsmotoren" VonRoll, CH-4426 Breitenbach) bewährt.

Epoxidharze auf der Basis von Bisphenol-A-diglycidethern sind durch den Gehalt an freiem Bisphenol-A toxikologisch nicht unbedenklich. Außerdem weisen diese Harze eine Viskosität im Bereich von 9 000 bis 13 000 mPas bei 25°C und damit eine für viele Anwendungen zu hohe Viskosität auf.

Cycloaliphatische Epoxidharze sind zwar niedrig viskos, haben aber eine stark allergene Wirkung.

In US2008/0009599 A1 sind Glycidether von Anhydrozuckern wie Isosorbid, Isomannid und Isoidid sowie daraus durch Härtung mit aliphatischen und aromatischen Polyaminen erhaltene Harze beschrieben.

Aufgabe der Erfindung ist es, Elektroisolierharzformulierungen bereitzustellen, die die oben beschriebenen Nachteile nicht aufweisen. Insbesondere sollten sie toxikologisch unbedenklich sein, eine geringe Viskosität, kurze Gelzeiten sowie gute Härtungseigenschaften und gute Verbackungsfestigkeiten aufweisen.

Gelöst wird die Aufgabe durch ein Elektroisolierharz enthaltend
A) Diglycidether eines Isohexiddiols,
B) einen Härter,
C) gegebenenfalls einen Füllstoff,
D) gegebenenfalls weitere Additive.

Überraschender Weise wurde gefunden, dass der Diglycidether eines Isohexiddiols als Epoxidharz für Elektroisolieranwendungen sehr gut verwendbar ist.

Isohexiddiole werden durch Anhydridbildung unter Abspaltung von 2 Molekülen Wasser aus den entsprechenden Hexitolen erhalten. Bevorzugt sind die Diglycidether von Isosorbid, Isomannid und Isoidid. Diese sind beispielsweise in US 3,272,845 beschrieben.

Bevorzugt ist der Isosorbiddiglycidether.

Isosorbid (1,4:3,6-Dianhydro-D-sorbitol) wird aus Glukose hergestellt. Daraus kann anschließend der Isosorbiddiglycidether nach verschiedenen Verfahren hergestellt werden, wie beispielsweise in WO 2008/147473 beschrieben. Der technisch verfügbare Isosorbiddiglycidether hat eine Viskosität von ca. 870 mPas bei 25 °C und ein Epoxyäquivalent von 166 EEW/g.

Ähnliche Eigenschaften wie der Isosorbiddiglycidether weisen der Isomanniddiglycidether und der Isoididdiglycidether auf.

Das erfindungsgemäße Elektroisolierharz weist eine hervorragende Haftung und hervorragende elektrische Isolierungseigenschaften im ausgehärteten Zustand auf. Das Harz kann alleine oder in Kombination mit festen Isoliermaterialen (Bändern etc.) dazu verwendet werden, elektrische Geräte wie zum Beispiel Motoren, Transformatoren und Generatoren zu isolieren.

Isosorbiddiglycidether sowie die anderen Isohexiddioldiglycidether können in verschiedenen Elektroisolierharzformulierungen zum Einsatz kommen und darin beispielsweise an Stelle von Bisphenol-A-diglycidether verwendet werden. Die Wahl der Menge der Isohexiddioldiglycidether erfolgt entsprechend den unterschiedlichen Epoxyäquivalenten der Isohexiddioldiglycidether und der Epoxyverbindungen, die durch die Isohexiddioldiglycidether substituiert werden.

Das erfindungsgemäße Elektroisolierharz enthält mindestens einen Härter B). Geeignete Härter für Epoxidharze sind Dicarbonsäuren oder Dicarbonsäureanhydride, diprimäre Di- oder Polyamine, oder Lewissäuren.

In einer Ausführungsform der Erfindung enthält der Härter B) eine oder mehrere Dicarbonsäuren- oder Dicarbonsäureanhydride. Als Härter geeignete Dicarbonsäuren- oder Dicarbonsäureanhydride sind beispielsweise Tetrahydrophthalsäureanhydrid, Methyltetrahydrophthtalsäureanhydrid, Hexahydrophthalsäureanhydrid und Dodecylbernsteinsäureanhydrid. Bevorzugt sind Tetrahydrophthalsäureanhydrid und Hexahydrophthalsäureanhydrid.

Im Allgemeinen werden pro Epoxyäquivalen des Isohexiddioldiglycidethers 75 % bis 100% , bevorzugt 85 % bis 100% des Anhydridäquivalents des Anhydridhärters eingesetzt.

Neben dem Härter B) kann ein Reaktionsbeschleuniger in den Harzen enthalten sein. Wird als Härter B) ein Dicarbonsäureanhydrid verwendet, so wird bevorzugt ein Reaktionsbeschleuniger mitverwendet. Geeignete Reaktionsbeschleuniger sind tertiäre Amine, beispielsweise Benzyldimethylamin, Triethylamin, Triethanolamin und N-Methylmorpholin.

In einer weiteren Ausführungsform enthält der Härter B) diprimäre Di- oder Polyamine. Als Härter geeignet sind beispielsweise 1,6-Hexylendiamin, Isophorondiamin, Xylylendiamine, Diethylentriamin, Triethylentetramin, Tetraethylenpentamin, Pentamethylenhexamin und Polyetherpolyamine, wie z.B. Jeffamin D 400.

Im Allgemeinen werden pro Epoxyäquivalent des Isohexiddioldiglycidethers 75 % bis 100% der äquivalenten Aminmenge, bevorzugt 85 % bis 100% der äquivalenten Aminmenge als diprimäres Di- oder Polyamin eingesetzt.

In einer weiteren Ausführungsform enthält der Härter B) eine Lewissäure. Als Härter geeignete Lewissäuren sind beispielsweise Bortrifluorid- oder Bortrichlorid-Komplexe, insbesondere die Amin-Komplexe. Beispiele sind der Monethanolamin-, Ammoniak sowie Piperidin-, Trimethylamin-, Hexamethylentetramin- oder Pyridinkomplex des Bortrifluorids sowie der Dimethyloctylamin- oder Pyridinkomplex des Bortrichlorids.

Im Allgemeinen werden 1 bis 6 Gew.-%, bevorzugt 2 bis 5 Gew.-%, bezogen auf die Gesamtmasse des Elektroisolierharzes, der Lewissäure eingesetzt.

In einer speziellen Ausführungsform der Erfindung enthält der Härter B) einen Bortrichlorid-Aminkomplex.

Das Elektroisolierharz kann einen oder mehrere Füllstoffe enthalten. Geeignete Füllstoffe sind beispielsweise ausgewählt aus der Gruppe bestehend aus Dolomit, Kreide, Quarzgut, Quarzmehl, Aluminiumhydroxid, Magnesiumhydroxid und deren Gemischen.

Der oder die Füllstoffe können in Mengen von 20 bis 70 Gew.-%, bezogen auf die Gesamtmasse des Elektroisolierharzes, enthalten sein.

Ist das Elektroisolierharz ein Gießharz, so enthält es bevorzugt einen Füllstoff. Ist das Elektroisolierharz ein Imprägniermittel, so enthält es bevorzugt keinen Füllstoff.

Das Elektroisolierharz kann weitere Additive D) enthalten. Additive sind die schon erwähnten Reaktionsbeschleuniger, daneben Benetzungsadditive, Verlaufshilfsmittel und Pigmente.

Additive können im Allgemeinen in Mengen von 0 bis 6 Gew.-%, bezogen auf die Gesamtmasse des Elektroisolierharzes, enthalten sein.

Daneben kann das Elektroisolierharz einen Reaktivverdünner enthalten. Geeignete Reaktivverdünner sind Diglycidether von Diolen oder langkettigen Monoolen, beispielsweise Butandioldiglycidether, Hexandioldigylcidether, Phenylglycidether, Kresylglycidether, Decylglycidether, Dodecylglycidether, Polyethylenglykolmonoglycidether und Poly-THF-monoglycidether. Sind diese enthalten, so können sie in Mengen von bis zu 20 Gew.-%, bezogen auf die Gesamtmasse des Elektroisolierharzes, enthalten sein, führen aber zu weichen Formstoffen. Vorzugsweise enthalten die Elektroisolierharze keinen Reaktivverdünner.

Die erfindungsgemäße Formulierung wird durch die in der Praxis übliche Vorgehensweise, wie z.B. Tauchen, Tauchrollieren, Träufeln, Gießen, Vakuum oder Vakuum-Druckimprägnierung in die Wicklung einer Elektromaschine eingebracht. Danach folgt eine thermische Härtung, die entweder in einem Ofen oder durch die Stromwärme der Wicklung oder durch die Kombination dieser Möglichkeiten ausgehärtet wird.

Gegenstand der Erfindung ist auch die Verwendung der Isohexiddioldiglycidether, insbesondere von Isosorbiddiglycidether, Isomanniddiglycidether und Isoididdiglycidether, in Elektroisolierharzen zur Imprägnierung von Elektromaschinen, zum Verguss von Transformatoren, Spulen und Elektromotoren und zur Herstellung von Hochspannungsisolatoren.

Gegenstand der Erfindung ist auch die Verwendung der zuvor beschriebenen Elektroisolierharze zur Imprägnierung von Elektromaschinen, insbesondere zur Imprägnierung von Hochspannungselektromaschinen. Gegenstand der Erfindung ist weiterhin die Verwendung der Elektroisolierharze zum Verguss von Transformatoren, von Spulen, zum Vollverguss von Elektromotoren und zur Herstellung von Hochspannungsisolatoren.

Im Folgenden wird die Erfindung unter Bezugnahme auf Beispiele näher beschrieben. Die Ausprüfung erfolgt nach DIN und IEC-Normen.

### Beispiele

Die Beispiele sollen die vorliegende Erfindung erläutern, schränken diese aber keinesfalls ein.

### Vergleichsbeispiel 1

53,33 g Bisphenol-A- diglycidether (EEW = 190), 46,53 g Methyltetrahydrophthalsäureanhydrid und 0,14 g Benzyldimethylamin werden gemischt und für weitere Versuche verwendet. Die Rezeptur enthält 100 % der theoretischen Härtermenge. Die Gelzeit beträgt 20'20" bei 120°C und 11'19" bei 130°C. Die Viskosität beträgt 656 mPa.s bei 25°C.

### Beispiel 2

49,88 Isosorbiddiglycidether (EEW=166), 49,97 Methyltetrahydrophthalsäureanhydrid und 0,15 g Benzyldimethylamin werden gemischt und für weitere Versuche verwendet. Die Rezeptur enthält 100 % der theoretischen Härtermenge. Die Gelzeit beträgt 11'01" bei 120°C und 5'12" bei 130°C. Die Viskosität beträgt 421 mPa.s bei 25°C.

### Härtungsversuche

Drillstäbe nach IEC 61033 werden mit den Harzen imprägniert. Sie werden 3 Stunden bei 130°C gehärtet und die Verbackungsfestigkeiten werden temperaturabhängig bestimmt.

Diese betragen für Vergleichsbeispiel 1
589 N (23°C), 69 N (155°C), 42 N (180°C);

Für das Beispiel 2 betragen die Verbackungsfestigkeiten
632 N (23°C), 57 N (155°C), 45 N (180°C).

### Vergleichsbeispiel 3

57,14 g Bisphenol-A-diglycidether, 42,73 g Methyltetrahydrophthalsäureanhydrid und 0,13 g Benzyldimethylamin werden gemischt und für weitere Versuche verwendet. Die Rezeptur enthält 85 % der theoretischen Härtermenge. Die Gelzeit beträgt 22'21" bei 120°C und 12'32" bei 130°C. Die Viskosität beträgt 805 mPa.s bei 25°C.

### Beispiel 4

53,91 Isosorbiddiglycidether, 45,95 Methyltetrahydrophthalsäureanhydrid und 0,14 g Benzyldimethylamin werden gemischt und für weitere Versuche verwendet. Die Rezeptur enthält 85 % der theoretischen Härtermenge. Die Gelzeit beträgt 9'28" bei 120°C und 5'00" bei 130°C. Die Viskosität beträgt 523 mPa.s bei 25°C.

### Härtungsversuche

Wird Vergleichsbeispiel 3 Stunden bei 120°C gehärtet, hat der Formstoff eine Shore D-Härte von 76. Erfolgt die Härtung bei 130°C, beträgt sie 78, d.h. sie ändert sich nicht.

Für die Mischung aus Beispiel 4 sind die entsprechenden Shore D-Härten 77 für beide Aushärtungen.

### Vergleichsbeispiel 5

52,91 Bisphenol-A-diglycidether, 46,95 Methylhexahydrophthalsäureanhydrid und 0,14 g Benzyldimethylamin werden gemischt und für weitere Versuche verwendet. Die Rezeptur enthält 85 % der theoretischen Härtermenge. Die Gelzeit beträgt 19' 11" bei 120°C und 11" bei 130°C. Die Viskosität beträgt 643 mPa.s bei 25°C.

### Beispiel 6

49,38 Isosorbiddiglycidether, 50,47 Methylhexahydrophthalsäureanhydrid und 0,15 g Benzyldimethylamin werden gemischt und für weitere Versuche verwendet. Die Rezeptur enthält 85 % der theoretischen Härtermenge. Die Gelzeit beträgt 9'22" bei 120°C und 4'39" bei 130°C. Die Viskosität beträgt 408 mPa.s bei 25°C.

Mit den Harzen der Beispiele 2, 4 und 6 werden Statoren der Baugröße 90 getränkt. Nach einer Abtropfphase werden die Statoren zwei Stunden bei 160°C gehärtet. Danach werden sie aufgesägt. Alle zeigen eine satte, lunkerfreie Imprägnierung der Kupferwicklungen.

### Beispiel 7

In einem Dissolver wird eine homogene Mischung aus 108,6 g eines phthalatfreien Weichmachers, 526,9 g Isosorbiddiglycidether, 1,0 g pyrogener Kieselsäure, 0,1 g eines handelsüblichen silikonhaltigen Entschäumers, 342,9 g Kreide, 20 g einer schwarzen Pigmentpaste und 1,4 g Benzyldimethylamin hergestellt. Das Material hat eine Viskosität von 4800 mPa.s bei 23°C. Nach der Zugabe von 449,2 g Methyltetrahydrophthalsäureanhydrid wir homogenisiert und es werden verschiedene Probekörper hergestellt. Die Durchsschlagspannung beträgt 32 kV/mm (nach IEC 60 243-1 in Verbindung mit IEC 60 455-2). Die Kriechwegbildung ist 600 (nach IEC 60 112 in Verbindung mit 60 455-2). Die Schlagzähigkeit beträgt 12 kJ/m² (nach (ISO 179).

### Beispiel 8

916 g Isosorbiddiglycidether werden gemischt mit 1 g eines Benetzungsadditivs, 1g eine eines Verlaufshilfsmittels und 37 g eines handelsüblichen Bortrichloridaminkomplexes. Ein Röbelstab von 70 x 2 x 1 cm der mit sieben, sich halb überlappenden (14 Lagen) eines handelsüblichen Glimmer/Glasbandes umwickelt ist, wird damit im Vakuum-DruckVerfahren imprägniert (0,1 bar Vakuum/1 Stunde gefolgt von 6 bar Druck/5 Stunden). Der Stab wird 6 Stunden bei 160°C gehärtet. Ein Stab wird aufgeschnitten. Die Imprägnierung ist homogen und vollständig bis zum Kupfer.

Bei 6 kV beträgt der dielektrische Permitivitätsverlustfaktor 0,0031, bei 10 kV 0,0036. Permitivitätsverlustfaktor ist temperaturabhängig und beträgt bei 21°C 0,0031, bei 90°C 0,0096, bei 130°C 0,0326 und bei 155°C 0,1498.

## Patentansprüche

1. Verwendung eines Elektroisolierharzes enthaltend
A) Isohexiddioldiglycidether,
B) einen Härter,
C) gegebenenfalls einen Füllstoff,
D) gegebenenfalls weitere Additive,
zur Imprägnierung von Elektromaschinen, zum Verguss von Transformatoren, von Spulen, zum Vollverguss von Elektromotoren und zur Herstellung von Hochspannungselektromaschinen.

2. Verwendung nach Anspruch 1, **dadurch gekennzeichnet, dass** der Isohexiddioldiglycidylether ein Isosorbiddiglycidether, Isomanniddiglycidether oder Isoididdiglycidether ist.

3. Verwendung nach Anspruch 1 oder 2, **dadurch gekennzeichnet, dass** der Härter B) ein oder mehrere Dicarbonsäure- oder Dicarbonsäureanhydride enthält.

4. Verwendung nach Anspruch 3, **dadurch gekennzeichnet, dass** der Härter B) Methyltetrahydrophthalsäureanhydrid oder Methylhexahydrophthalsäureanhydrid enthält.

5. Verwendung nach einem der Ansprüche 1 bis 4, **dadurch gekennzeichnet, dass** es einen Reaktionsbeschleuniger enthält.

6. Verwendung nach einem der Ansprüche 1 bis 5, **dadurch gekennzeichnet, dass** es einen Füllstoff enthält.

7. Verwendung nach Anspruch 6, **dadurch gekennzeichnet, dass** der Füllstoff ausgewählt ist aus der Gruppe bestehend aus Dolomit, Kreide, Quarzgut, Quarzmehl, Aluminiumhydroxid, Magnesiumhdyroxid und deren Gemischen.

8. Verwendung nach Anspruch 1, **dadurch gekennzeichnet, dass** der Härter B) eine Lewissäure enthält.

9. Verwendung nach Anspruch 8, **dadurch gekennzeichnet, dass** der Härter B) einen Bortrichlorid-Aminkomplex enthält.

10. Verwendung nach einem der Ansprüche 1 bis 9 zur Imprägnierung von Hochspannungselektromaschinen.

11. Verwendung von Isohexiddioldiglycidethern in Elektroisolierharzen zur Imprägnierung von Elektromaschinen, zum Verguss von Transformatoren, Spulen und Elektromotoren und zur Herstellung von Hochspannungsisolatoren.

## Claims

1. Use of an electrical insulating resin comprising
A) isohexidediol diglycidyl ether
B) a hardener
C) an optional filler
D) further optional additives, for impregnating electrical machines, for encapsulating transformers, coils, for fully encapsulating electric motors and for producing high-voltage electrical machines.

2. Use according to Claim 1, **characterized in that** the isohexidediol diglycidyl ether is an isosorbide diglycidyl ether, isomannide diglycidyl ether or isoidide diglycidyl ether.

3. Use according to Claim 1 or 2, **characterized in that** the hardener B) comprises one or more dicarboxylic or dicarboxylic anhydrides.

4. Use according to Claim 3, **characterized in that** the hardener B) comprises methyltetrahydrophthalic anhydride or methylhexahydrophthalic anhydride.

5. Use according to any of Claims 1 to 4, **characterized in that** it comprises a reaction accelerator.

6. Use according to any of Claims 1 to 5, **characterized in that** it comprises a filler.

7. Use according to Claim 6, **characterized in that** the filler is selected from the group consisting of dolomite, chalk, fused silica, quartz flour, aluminium hydroxide, magnesium hydroxide and mixtures thereof.

8. Use according to Claim 1, **characterized in that** the hardener B) comprises a Lewis acid.

9. Use according to Claim 8, **characterized in that** the hardener B) comprises a boron trichloride-amine complex.

10. Use according to any of Claims 1 to 9 for impregnating high-voltage electrical machines.

11. Use of isohexidediol diglycyl ethers in electrical insulating resins for impregnating electrical machines, for encapsulating transformers, coils and electric motors and for producing high-voltage insulators.

## Revendications

1. Utilisation d'une résine électriquement isolante, contenant :
A) de l'éther diglycidylique d'isohexide diol,
B) un durcisseur,
C) éventuellement une charge,
D) éventuellement d'autres additifs,
pour l'imprégnation de machines électriques, pour le scellement de transformateurs, de bobines, pour le scellement complet de moteurs électriques et pour la fabrication de machines électriques haute tension.

2. Utilisation selon la revendication 1, **caractérisée en ce que** l'éther diglycidylique d'isohexide diol est un éther diglycidylique d'isosorbide, un éther diglycidylique d'isomannide ou un éther diglycidylique d'isoidide.

3. Utilisation selon la revendication 1 ou 2, **caractérisée en ce que** le durcisseur B) contient un ou plusieurs anhydrides d'acides dicarboxyliques ou d'acides dicarboxyliques.

4. Utilisation selon la revendication 3, **caractérisée en ce que** le durcisseur B) contient de l'anhydride de l'acide méthyltétrahydrophtalique ou de l'anhydride de l'acide méthylhexahydrophtalique.

5. Utilisation selon l'une quelconque des revendications 1 à 4, **caractérisée en ce qu'**elle contient un accélérateur de réaction.

6. Utilisation selon l'une quelconque des revendications 1 à 5, **caractérisée en ce qu'**elle contient une charge.

7. Utilisation selon la revendication 6, **caractérisée en ce que** la charge est choisie dans le groupe constitué par la dolomite, la craie, la silice fondue, la farine de quartz, l'hydroxyde d'aluminium, l'hydroxyde de magnésium et leurs mélanges.

8. Utilisation selon la revendication 1, **caractérisée en ce que** le durcisseur B) contient un acide de Lewis.

9. Utilisation selon la revendication 8, **caractérisée en ce que** le durcisseur B) contient un complexe trichlorure de bore-amine.

10. Utilisation selon l'une quelconque des revendications 1 à 9 pour l'imprégnation de machines électriques haute tension.

11. Utilisation d'éthers diglycidyliques d'isohexide diol dans des résines électriquement isolantes pour l'imprégnation de machines électriques, pour le scellement de transformateurs, de bobines et de moteurs électriques et pour la fabrication de machines électriques haute tension.
